# EUROPÄISCHE PATENTANMELDUNG

(11) **EP 4 404 009 A2**
(43) Veröffentlichungstag der Anmeldung: **24.07.2024**
(21) Anmeldenummer: 24180765.0
(22) Anmeldetag: 09.05.2018
(51) Int. Cl.: G05B 19/409

(54) **SYSTEM ZUR BEARBEITUNG VON WERKSTÜCKEN**

(30) Priorität: 11.05.2017 DE 102017207993
(62) Teilanmeldung aus: 18724213.6
(71) Anmelder: HOMAG GmbH, 72296 Schopfloch (DE)
(72) Erfinder: VINSKI, Marijo, 72293 Glatten (DE); HOMEIER, Achim, 72285 Pfalzgrafenweiler (DE)
(74) Vertreter: Hoffmann Eitle

(57) **Zusammenfassung**

Ein System (1) zur Bearbeitung von Werkstücken, die bevorzugt zumindest abschnittsweise aus Holz, Holzwerkstoffen, Kunststoff oder dergleichen bestehen, umfasst eine Bearbeitungsvorrichtung (10) zur Durchführung der Werkstückbearbeitung, die eine Datenfernübertragungsschnittstelle (12) aufweist, und ein Endgerät (20), das eine Datenfernübertragungsschnittstelle (22) aufweist, die eingerichtet ist, mit der Datenfernübertragungsschnittstelle (12) der Bearbeitungsvorrichtung (10) über eine Datenfernverbindung (30) zu kommunizieren. Das System ist dadurch gekennzeichnet, dass das Endgerät (20) eingerichtet ist, Bedienbefehle eines Benutzers entgegenzunehmen und über die Datenfernübertragungsschnittstelle (22) an die Bearbeitungsvorrichtung (10) weiterzugeben.

## Beschreibung

### Technisches Gebiet

Die Erfindung betrifft ein System zur Bearbeitung von Werkstücken, die bevorzugt zumindest abschnittsweise aus Holz, Holzwerkstoffen, Kunststoff oder dergleichen bestehen, nach dem Oberbegriff des Anspruchs 1.

### Stand der Technik

Im Bereich der Möbel- und Bauelementeindustrie kommen unterschiedlichste Bearbeitungsvorrichtungen zum Einsatz, um verschiedene Bearbeitungsvorgänge an Werkstücken durchzuführen. Beispiele für derartige Bearbeitungsvorgänge sind spanende Bearbeitungen wie beispielsweise Formatieren, Sägen, Fräsen, Bohren oder dergleichen, aber auch Beschichtungsvorgänge wie beispielsweise das Anleimen von Kanten oder Deckmaterialien.

Derartige Maschinen weisen üblicherweise eine Maschinensteuerung auf, mittels welcher der Betrieb der Bearbeitungsvorrichtung auf der Grundlage von Bearbeitungsdaten gesteuert wird. Die Maschinensteuerung wird üblicherweise von einer Bedienperson bedient und überwacht. Hierbei treten erhebliche Nebenkosten auf, da die Bedienperson für die Bedienung bzw. Überwachung der Maschine an der Maschinensteuerung anwesend sein muss und keine oder nur geringfügige andere Tätigkeiten ausführen kann.

### Darstellung der Erfindung

Es ist Aufgabe der Erfindung, ein System und ein Verfahren zur Bearbeitung von Werkstücken mit verbesserter Bedieneffizienz bereitzustellen.

Diese Aufgabe wird erfindungsgemäß durch ein System zur Bearbeitung von Werkstücken nach Anspruch 1 sowie ein Verfahren zur Bearbeitung von Werkstücken nach Anspruch 9 gelöst. Besonders bevorzugte Weiterbildungen der Erfindung sind in den abhängigen Ansprüchen angegeben.

Der Erfindung liegt der Gedanke zugrunde, die Bedienung einer Bearbeitungsmaschine räumlich von der eigentlichen Bearbeitungsvorrichtung zu entkoppeln. Zu diesem Zweck ist erfindungsgemäß vorgesehen, dass bei einem gattungsgemäßen System zur Bearbeitung von Werkstücken das Endgerät eingerichtet ist, Bedienbefehle eines Benutzers entgegenzunehmen und über die Datenfernübertragungsschnittstelle an die Bearbeitungsvorrichtung weiterzugeben.

Auf diese Weise kann die Tätigkeit einer Bedienperson räumlich und somit auch zeitlich von dem Betrieb der Bearbeitungsvorrichtung entkoppelt werden. Hierdurch kann die Bedieneffizienz erheblich gesteigert werden, da die Neben- bzw. Totzeiten, die eine Bedienperson bisher an einer Bearbeitungsvorrichtung verbringen musste, drastisch reduziert werden können.

Art und Inhalt der Bedienbefehle sind im Rahmen der vorliegenden Erfindung nicht besonders beschränkt. Gemäß einer Weiterbildung der Erfindung ist jedoch vorgesehen, dass das Endgerät eingerichtet ist, Bedienbefehle entgegenzunehmen und weiterzugeben, die sich auf eine Steuerung des Maschinenbetriebs beziehen. Alternativ oder zusätzlich ist es jedoch gemäß einer Weiterbildung der Erfindung ebenfalls vorteilhaft, wenn das Endgerät eingerichtet ist, Bedienbefehle entgegenzunehmen und weiterzugeben, die sich auf eine Aktivierung oder Rüsten mindestens einer Komponente der Bearbeitungsvorrichtung beziehen. Es können somit Bedienschritte, die dem eigentlichen Bearbeitungsbetrieb der Bearbeitungsvorrichtung vorgelagert sind, effizient mittels des erfindungsgemäßen Systems vorgenommen werden, ohne dass hierfür eine Präsenz der Bedienperson an der Bearbeitungsvorrichtung erforderlich wäre.

Ein besonders anschauliches Beispiel hierfür sind Komponenten mit zeitlich verzögertem Ansprechverhalten, wie beispielsweise Haftmittelaktivierungseinrichtungen. Derartige Komponenten besitzen die Eigenschaft, dass sie beispielsweise zunächst hochgefahren, angedockt, vorgewärmt oder auf sonstige Weise aktiviert oder gerüstet werden müssen, sodass bisher lange Wartezeiten für die Bedienperson an der Maschine entstanden sind. Diese Wartezeiten können erfindungsgemäß reduziert bzw. vollständig eliminiert werden.

Alternativ oder zusätzlich ist gemäß einer Weiterbildung der Erfindung ferner vorgesehen, dass das Endgerät eingerichtet ist, Bearbeitungsanweisungen für die Durchführung der Werkstückbearbeitung entgegenzunehmen und weiterzugeben. Bei derartigen Bearbeitungsanweisungen kann es sich im einfachsten Falle beispielsweise um die bloße Freigabe oder Bestätigung eines von der Bearbeitungsvorrichtung durchzuführenden Bearbeitungsbetriebes handeln. Es ist jedoch ebenfalls vorteilhaft möglich, dass die Bearbeitungsanweisungen Bearbeitungsdaten für das jeweilige zu bearbeitende Werkstück beinhalten. Je nach Ausbaustufe wird somit eine teilweise oder sogar vollständige Fernsteuerung der Bearbeitungsvorrichtung mittels des Endgeräts möglich. Hieraus ergeben sich erhebliche Effizienzsteigerungen.

Das Endgerät des erfindungsgemäßen Systems kann ferner gemäß einer bevorzugten Ausführungsform der Erfindung nicht nur als Eingabegerät, sondern auch als Ausgabegerät dienen und dementsprechend eingerichtet sein, über die Datenfernübertragungsschnittstelle Daten von der Bearbeitungsvorrichtung zu empfangen und an einen Benutzer weiterzugeben. Hierdurch wird eine vollständige Interaktion zwischen der Bedienperson und der Bearbeitungsvorrichtung ermöglicht, wodurch die Bedieneffizienz weiter gesteigert wird und darüber hinaus auch eine erhöhte Betriebssicherheit und eine große Betriebsvielfalt ermöglicht wird.

Das Endgerät des erfindungsgemäßen Systems kann auf vielfältige Art und Weise ausgestaltet sein. Vorteilhaft weist das Endgerät jedoch ein mobiles Endgerät auf, das bevorzugt eine drahtlos arbeitende Datenfernübertragungsschnittstelle besitzt. Hierdurch erhält der Benutzer bzw. die jeweilige Bedienperson ein Höchstmaß an Flexibilität, sodass die Bedienperson zusätzlich zur Bedienung der Maschine mittels des Endgeräts eine Vielzahl weiterer Aufgaben ausüben kann. Im Ergebnis lassen sich etwaige Nebenzeiten hierdurch drastisch verringern.

Gemäß einer Weiterbildung der Erfindung ist ferner vorgesehen, dass das System einen Kommunikationsserver, insbesondere mit Datenspeicher, aufweist, der in die Datenfernverbindung eingebunden ist. Hierdurch lässt sich die Funktionalität und Vernetzbarkeit des Systems weiter steigern, insbesondere wenn der Kommunikationsserver nach Art einer "Cloud" ausgestaltet ist.

Die vorstehend beschriebenen Vorteile lassen sich besonders wirksam mit dem Verfahren nach Anspruch 9 realisieren.

### Kurze Beschreibung der Zeichnung

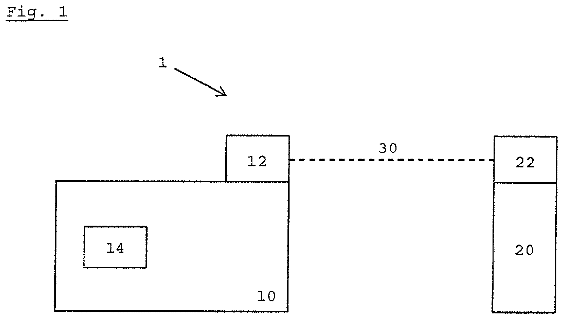

Fig. 1 zeigt schematisch eine Ausführungsform der vorliegenden Erfindung.

### Ausführliche Beschreibung bevorzugter Ausführungsformen

Bevorzugte Ausführungsformen der Erfindung werden nachfolgend ausführlich unter Bezugnahme auf Fig. 1 beschrieben, die schematisch ein System 1 zur Bearbeitung von Werkstücken zeigt. Weitere in diesem Zusammenhang genannte Modifikationen bestimmter Einzelmerkmale können jeweils miteinander kombiniert werden, um neue Ausführungsformen auszubilden.

Bei den Werkstücken kann es sich um Bauteile aus Holz oder verschiedenen Holz- oder Kunststoffwerkstoffen handeln, wie sie im Bereich der Möbel- und Bauelementeindustrie verbreitet zum Einsatz kommen. Das System 1 umfasst zunächst eine Bearbeitungsvorrichtung 10 zur Durchführung der eigentlichen Werkstückbearbeitung. Hierbei kann es sich um unterschiedlichste Bearbeitungsvorrichtungen handeln, wie beispielsweise Bohrvorrichtungen, Fräsvorrichtungen, Beschichtungsvorrichtungen und vielfältige andere Vorrichtungen. Die Bearbeitungsvorrichtung 10 umfasst eine Datenfernübertragungsschnittstelle 12, die dazu dient, eine Kommunikation zu dem in Fig. 1 schematisch dargestellten Endgerät 20 zu ermöglichen. Zu diesem Zweck besitzt das Endgerät 20 ebenfalls eine Datenfernübertragungsschnittstelle 22, die eingerichtet ist, mit der Datenfernübertragungsschnittstelle 12 der Bearbeitungsvorrichtung 10 über eine Datenfernverbindung 30 zu kommunizieren.

Im Rahmen der vorliegenden Erfindung ist das Endgerät 20 eingerichtet, Bedienbefehle eines Benutzers entgegenzunehmen und diese über die Datenfernübertragungsschnittstelle 22 an die Bearbeitungsvorrichtung 10 weiterzugeben. Dabei kann es sich um unterschiedlichste Bedienbefehle handeln, insbesondere um Bedienbefehle, die sich auf eine Steuerung des Maschinenbetriebs beziehen. In der vorliegenden Ausführungsform weist die Bearbeitungsvorrichtung 10 eine Komponente 14 auf, bei der es sich beispielsweise um eine Haftmittelaktivierungseinrichtung handeln kann. In diesem Falle ist das Endgerät 20 eingerichtet, Bedienbefehle entgegenzunehmen und weiterzugeben, die sich auf ein Aktivieren bzw. Rüsten der Haftmittelaktivierungseinrichtung beziehen. Somit kann eine Bedienperson mittels des Endgeräts 20 beispielsweise die Haftmittelaktivierungseinrichtung 14 einschalten, sodass die Haftmittelaktivierungseinrichtung 14 ihren Betrieb aufnimmt und beispielsweise vorgeheizt wird. Hierdurch kann sichergestellt werden, dass die Haftmittelaktivierungseinrichtung 14 bzw. die Bearbeitungsvorrichtung 10 als Ganzes zu einem gewünschten Zeitpunkt betriebsbereit ist, indem beispielsweise rechtzeitig vor dem gewünschten Zeitpunkt eine Aktivierung der jeweiligen Komponenten mittels des Endgeräts 20 vorgenommen wird. Hierfür kann erfindungsgemäß eine Datenfernverbindung genutzt werden, sodass eine erhebliche Effizienzsteigerung erzielt werden kann.

In der vorliegenden Ausführungsform ist das Endgerät 20 darüber hinaus auch eingerichtet, über die Datenfernübertragungsschnittstelle 22 Daten von der Bearbeitungsvorrichtung 10 zu empfangen und an die jeweilige Bedienperson weiterzugeben. Auf diese Weise wird die Bedienperson in die Lage versetzt, sich über den Betriebszustand oder auch mögliche Fehlermeldungen oder möglichen Handlungsbedarf in Bezug auf die Bearbeitungsvorrichtung 10 zu informieren. Dank der Datenfernübertragungsverbindung 30 kann der Benutzer dies im Prinzip von jedem beliebigen Ort durchführen und muss nicht an der jeweiligen Bearbeitungsvorrichtung anwesend sein. Vor diesem Hintergrund ist das Endgerät 20 in der vorliegenden Ausführungsform auch als mobiles Endgerät ausgestaltet, das eine drahtlos arbeitende Datenfernübertragungsschnittstelle 22 besitzt. Bei dieser Schnittstelle kann es sich in diesem Falle beispielsweise um eine WLan-Schnittstelle, eine Bluetooth-Schnittstelle, eine Mobilfunkschnittstelle oder dergleichen handeln.

Obgleich in Fig. 1 nicht gezeigt, kann das System einen Kommunikationsserver, insbesondere mit Datenspeicher, aufweisen, der in die Datenfernverbindung eingebunden ist. Hierdurch lässt sich die Funktionalität und Vernetzbarkeit des Systems weiter steigern, insbesondere wenn der Kommunikationsserver nach Art einer "Cloud" ausgestaltet ist.

Der Betrieb des erfindungsgemäßen Systems beinhaltet somit das Herstellen einer Datenfernverbindung zwischen dem Endgerät 20 und der Bearbeitungsvorrichtung 10 und das Eingeben eines Bedienbefehls in das Endgerät, der dann über die Datenfernverbindung an die Bearbeitungsvorrichtung weitergegeben wird. Hierdurch wird die Bedienperson in die Lage versetzt, räumlich entkoppelt von der Bearbeitungsvorrichtung zu agieren, was zu erheblichen Effizienzsteigerungen führt.

### Weitere Ausführungsformen

1. System (1) zur Bearbeitung von Werkstücken, die bevorzugt zumindest abschnittsweise aus Holz, Holzwerkstoffen, Kunststoff oder dergleichen bestehen, umfassend:
   eine Bearbeitungsvorrichtung (10) zur Durchführung der Werkstückbearbeitung, die eine Datenfernübertragungsschnittstelle (12) aufweist, und
   ein Endgerät (20), das eine Datenfernübertragungsschnittstelle (22) aufweist, die eingerichtet ist, mit der Datenfernübertragungsschnittstelle (12) der Bearbeitungsvorrichtung (10) über eine Datenfernverbindung (30) zu kommunizieren,
   dadurch gekennzeichnet, dass
   das Endgerät (20) eingerichtet ist, Bedienbefehle eines Benutzers entgegenzunehmen und über die Datenfernübertragungsschnittstelle (22) an die Bearbeitungsvorrichtung (10) weiterzugeben.
2. System nach Ausführungsform 1, dadurch gekennzeichnet, dass das Endgerät (20) eingerichtet ist, Bedienbefehle entgegenzunehmen und weiterzugeben, die sich auf eine Steuerung des Maschinenbetriebs beziehen.
3. System nach Ausführungsform 1 oder 2, dadurch gekennzeichnet, dass das Endgerät (20) eingerichtet ist, Bedienbefehle entgegenzunehmen und weiterzugeben, die sich auf ein Aktivieren oder Rüsten mindestens einer Komponente (14) der Bearbeitungsvorrichtung (10) beziehen.
4. System nach Ausführungsform 3, dadurch gekennzeichnet, dass die Bearbeitungsvorrichtung eine Komponente (14) mit zeitlich verzögertem Ansprechverhalten aufweist, wie insbesondere eine Haftmittelaktivierungseinrichtung, und dass das Endgerät (20) eingerichtet ist, Bedienbefehle entgegenzunehmen und weiterzugeben, die sich auf ein Aktivieren oder Rüsten dieser Komponente (14) beziehen.
5. System nach einer der vorhergehenden Ausführungsformen, dadurch gekennzeichnet, dass das Endgerät (20) eingerichtet ist, Bearbeitungsanweisungen für die Durchführung der Werkstückbearbeitung entgegenzunehmen und weiterzugeben, insbesondere Bearbeitungsdaten für das jeweils zu bearbeitenden Werkstück.
6. System nach einer der vorhergehenden Ausführungsformen, dadurch gekennzeichnet, dass das Endgerät (20) eingerichtet ist, über die Datenfernübertragungsschnittstelle (22) Daten von der Bearbeitungsvorrichtung (10) zu empfangen und an einen Benutzer weiterzugeben.
7. System nach einer der vorhergehenden Ausführungsformen, dadurch gekennzeichnet, dass das Endgerät (20) ein mobiles Endgerät aufweist, das bevorzugt eine drahtlos arbeitende Datenfernübertragungsschnittstelle (22) besitzt.
8. System nach einem der vorhergehenden Ansprüche, dadurch gekennzeichnet, dass es ferner einen Kommunikationsserver, insbesondere mit Datenspeicher, aufweist, der in die Datenfernverbindung (30) eingebunden ist.
9. Verfahren zum Bearbeiten von Werkstücken, die bevorzugt zumindest abschnittsweise aus Holz, Holzwerkstoffen, Kunststoff oder dergleichen bestehen, insbesondere unter Einsatz eines Systems nach einem der vorhergehenden Ansprüche, mit den Schritten:
   Herstellen einer Datenfernverbindung zwischen einem Endgerät und einer Bearbeitungsvorrichtung zur Durchführung der Werkstückbearbeitung,
   Eingeben eines Bedienbefehls in das Endgerät und Weitergeben des Bedienbefehls an die Bearbeitungsvorrichtung über die Datenfernverbindung.

## Patentansprüche

1. System (1) zur Bearbeitung von Werkstücken, die bevorzugt zumindest abschnittsweise aus Holz, Holzwerkstoffen, Kunststoff oder dergleichen bestehen, umfassend:
eine Bearbeitungsvorrichtung (10) zur Durchführung der Werkstückbearbeitung, die eine Datenfernübertragungsschnittstelle (12) aufweist, und
ein Endgerät (20), das eine Datenfernübertragungsschnittstelle (22) aufweist, die eingerichtet ist, mit der Datenfernübertragungsschnittstelle (12) der Bearbeitungsvorrichtung (10) über eine Datenfernverbindung (30) zu kommunizieren, wobei
das Endgerät (20) eingerichtet ist, Bedienbefehle eines Benutzers entgegenzunehmen und über die Datenfernübertragungsschnittstelle (22) an die Bearbeitungsvorrichtung (10) weiterzugeben,
**dadurch gekennzeichnet, dass**
das System (1) ferner einen Kommunikationsserver aufweist, der in die Datenfernverbindung (30) eingebunden ist.

2. System nach Anspruch 1, **dadurch gekennzeichnet, dass** das Endgerät (20) eingerichtet ist, Bedienbefehle entgegenzunehmen und weiterzugeben, die sich auf eine Steuerung des Maschinenbetriebs beziehen.

3. System nach Anspruch 1 oder 2, **dadurch gekennzeichnet, dass** das Endgerät (20) eingerichtet ist, Bedienbefehle entgegenzunehmen und weiterzugeben, die sich auf ein Aktivieren oder Rüsten mindestens einer Komponente (14) der Bearbeitungsvorrichtung (10) beziehen.

4. System nach Anspruch 3, **dadurch gekennzeichnet, dass** die Bearbeitungsvorrichtung eine Komponente (14) mit zeitlich verzögertem Ansprechverhalten aufweist, wie insbesondere eine Haftmittelaktivierungseinrichtung, und dass das Endgerät (20) eingerichtet ist, Bedienbefehle entgegenzunehmen und weiterzugeben, die sich auf ein Aktivieren oder Rüsten, wie insbesondere Hochfahren, Andocken und/oder Vorwärmen dieser Komponente (14) beziehen.

5. System nach Anspruch 4, **dadurch gekennzeichnet, dass** die Bedienbefehle, die sich die sich auf ein Aktivieren oder Rüsten der Komponente (14) beziehen, dazu führen, dass Wartezeiten für die Bedienperson an der Bearbeitungsvorrichtung reduziert oder eliminiert werden.

6. System nach einem der vorhergehenden Ansprüche, **dadurch gekennzeichnet, dass** Endgerät (20) eingerichtet ist, Bedienbefehle eines Benutzers entgegenzunehmen und über die Datenfernübertragungsschnittstelle (22) an die Bearbeitungsvorrichtung (10) weiterzugeben, die sich auf Bedienschritte beziehen, die dem eigentlichen Bearbeitungsbetrieb der Bearbeitungsvorrichtung vorgelagert sind.

7. System nach einem der vorhergehenden Ansprüche, **dadurch gekennzeichnet, dass** das Endgerät (20) eingerichtet ist, Bearbeitungsanweisungen für die Durchführung der Werkstückbearbeitung entgegenzunehmen und weiterzugeben, insbesondere Bearbeitungsdaten für das jeweils zu bearbeitenden Werkstück.

8. System nach einem der vorhergehenden Ansprüche, **dadurch gekennzeichnet, dass** das Endgerät (20) eingerichtet ist, über die Datenfernübertragungsschnittstelle (22) Daten von der Bearbeitungsvorrichtung (10) zu empfangen und an einen Benutzer weiterzugeben.

9. System nach einem der vorhergehenden Ansprüche, **dadurch gekennzeichnet, dass** das Endgerät (20) ein mobiles Endgerät aufweist, das bevorzugt eine drahtlos arbeitende Datenfernübertragungsschnittstelle (22) besitzt.

10. System nach einem der vorhergehenden Ansprüche, **dadurch gekennzeichnet, dass** der Kommunikationsserver einen Datenspeicher aufweist und/oder cloudbasiert ist.

11. System nach einem der vorhergehenden Ansprüche, **dadurch gekennzeichnet, dass** der Kommunikationsserver cloudbasiert ist.

12. Verfahren zum Bearbeiten von Werkstücken, die bevorzugt zumindest abschnittsweise aus Holz, Holzwerkstoffen, Kunststoff oder dergleichen bestehen, unter Einsatz eines Systems nach einem der vorhergehenden Ansprüche, mit den Schritten:
Herstellen einer Datenfernverbindung zwischen einem Endgerät und einer Bearbeitungsvorrichtung zur Durchführung der Werkstückbearbeitung,
Eingeben eines Bedienbefehls in das Endgerät und Weitergeben des Bedienbefehls an die Bearbeitungsvorrichtung über die Datenfernverbindung.
